# EUROPEAN PATENT APPLICATION

(11) **EP 4 631 870 A1**
(43) Date of publication of application: **15.10.2025**
(21) Application number: 24382376.2
(22) Date of filing: 10.04.2024
(51) Int. Cl.: B65B 43/12, B65B 43/16, B65B 43/42, B65B 43/46, B65B 43/54, B65G 35/06, B65G 54/02

(54) **A SYSTEM FOR CONVEYING ARTICLES AND A PACKAGING MACHINE FOR PACKAGING PRODUCTS IN FLEXIBLE CONTAINERS THAT INCORPORATES THE SYSTEM**

(71) Applicant: Nexes Control Design Engineering S.L.U., 08970 Sant Joan Despi (ES)
(72) Inventor: JORGE ALESANCO, Cristobal, 08012 BARCELONA (ES)
(74) Representative: Sugrañes, S.L.P.

(57) **Abstract**

The present invention relates to a system (100, 101) for conveying articles along several workstations (70, 71, 72, 73, 74) with mobile shuttles (11, 11') by magnetic levitation with respect to a transit surface (12), having a given contour (14), following paths that can be predetermined in advance, the shuttles (11) being equipped with holding means (20) for holding at least one article that are configured such that they extend, or are capable of extending, outside the projection zn of their associated shuttle, where the projection zn is the projection of the shuttle in the direction normal to the transit surface (12) with respect to which said shuttles levitate; and the predeterminable paths comprise an operational section (T1, T2) along which the holding means (20) of the shuttles (11) that run along said operational section are arranged outside the projection ZN of the transit surface (12), where the projection ZN is the projection in the direction normal to said transit surface (12), enabling the shuttles (11) to convey the articles outside the given contour (14) of the transit surface (12) and by workstations (70, 71, 72, 73, 74) located to operate on the articles conveyed outside the contour (14) of the transit surface (12).

## Description

### Technical field of the invention

The invention relates to a system for conveying articles. The system can be adapted to convey flexible containers in a suspended mode. Consequently, the invention also relates to a packaging machine for packaging products in containers, said machine particularly suitable for packaging at least one pourable product in flexible containers conveyed in a suspended mode, which incorporates the system for conveying articles of the invention.

### Background of the invention

In the field of packaging, and more specifically in the packaging of products in flexible containers, automatic machines are known that comprise a conveyor for containers that combines a rail and a plurality of carts coupled to the rail with the possibility of movement. The rail normally follows a closed path inscribed in a horizontal plane and generally oval, in which two straight sections and two curved sections linking the straight sections are distinguished, and the carts have means that ensure the holding and conveying of the containers in a suspended mode between distributed, static workstations along the closed path of the rail.

Machines of this type, sometimes called carousel, have evolved over time and improvements have emerged. In any case, holding a container on opposite edges, using arms equipped with clamp mechanisms for this purpose, is a constant. The synchronous movement of the arms allows the container that is held to be conveyed; and the movement of the arms closer to or away from each other, i.e., producing a change in their relative position, allows the container to be opened and closed, where being able to do both things at the same time, i.e., conveying a container at the same time that it is opened and//or closed, is of interest.

Recently, conveyors have become known that allow the movement of carts coupled to a closed path rail to be individually controlled, using magnetic fields generated in the area of influence of each cart to do so. One example of a conveyor of this type, commonly known as magnetic rail transport, is that described in EP 3955436. Adaptations of this conveyor for conveying containers conveyed in a suspended mode on a carousel packaging machine are the subject, for example, of patent documents JP 2018172140 and EP 3744649.

In machines according to JP 2018172140 and EP 3744649, taking advantage of the fact that it is possible to individually control the movement of each cart along the rail, each cart is provided with at least one arm equipped with the corresponding clamp mechanism and the containers are conveyed by two adjacent carts that work together, specifically using the clamp mechanisms with which the arms of each cart are equipped and that hold each one, along one edge, to the container.

By conveniently and individually controlling the movement of the adjacent carts that together hold a container, not only is conveying of the container ensured, but so is its opening and/or closing to the extent desired or by adapting to the needs of each case. This enables the packaging machine to be easily adapted to a change in container format. This also allows the packaging machine to be easily adapted to changes in the operations carried out on the containers, for example, to changes in execution times and/or to changes in the number and arrangement of the workstations located along the rail.

The use of these magnetic rail conveyors in carousel packaging machines current represents a relative economic barrier. Conveyors of this type have a high cost and the packaging machines that use them try to make the most of the length of the rail. Thus, the machines according to JP 2018172140 and EP 3744649 are prepared to also make the most of the curved sections of the rail. This implies, however, having to mechanically link the arms of adjacent carts so that they remain parallel even in said curved sections and, therefore, limiting the adaptation capabilities of the machine to all container formats.

One purpose of the invention is to provide an alternative system for conveying articles to the system used by the aforementioned packaging machines. Another objective of the invention is a packaging machine, comprising said system and suitable for packaging at least one pourable product in flexible containers conveyed in a suspended mode that represents an alternative to the known carousel machines.

The use of magnetic rail conveyors is also known in non-carousel packaging machines. An example is described in patent document EP 3321196 which relates to a machine with a container receiving station with workstations on both sides of said station and that uses individually controlled carts to move back and forth along a rail that is not closed on itself, more specifically several pairs of carts that are coordinated to jointly hold the received containers on which an operation is carried out at the receiving station and to dispatch these containers held alternately on one side and the other of the receiving station when the operation that is carried out on them in said receiving station is completed. Advantageously, although the operation that is carried out on the containers at the workstations has a longer execution time than the execution time of the operation that is carried out at the receiving station, this does not entail a bottleneck since the containers are conveyed from the receiving station to a different workstation each time, in practice dispatching to the workstation that has operated not on the previously dispatched container, but on the container dispatched two cycles earlier in the machine.

Despite these advantages, having a rail that is not closed on itself implies that a first pair of carts conveying a container from the receiving station to a workstation, moving along a section of the rail in one direction, must come back on the path taken to return to the receiving station, moving along the same section of the rail, although in the opposite direction. This return path, in the meantime occupying the rail along which the carts move, prevents a new container from being conveyed, held by another pair of carts towards the same workstation from which the first pair of carts move in the direction of the receiving station. Consequently, the machine may no longer be of interest if the total execution time of the workstations on the same side of the receiving station exceeds twice the execution time of the operation carried out on the containers at the receiving station.

Another purpose of the invention is to provide a system for conveying articles, as well as a packaging machine that incorporates said system, the machine being particularly suitable for packaging at least one pourable product in flexible containers conveyed in a suspended mode, which overcome the disadvantages of the machine according to EP 3321196.

In the field of conveyors, even more recently than the appearance of magnetic rail conveyors, conveyors have been provided that are capable of controlling the movement of mobile shuttles on a transit surface by levitation, in other words, without the shuttles coupled to a rail being subject to paths imposed by the rail. These conveyors also use magnetic fields to move the shuttles. It is common to refer to these conveyors as "planar motor" or "maglev" conveyors.

Examples of "planar motor" conveyors are described, for example, in patent documents WO2006/054243 and WO2009/083889. Examples of commercial "planar motor" conveyor products are Acopos 6D from B&R Industrial Automation; XPlanar from Beckhoff Automation; or Xbots from Planar Motor. The use of "planar motor" conveyors in food product packaging machines is described, for example, in EP4072948 and WO2022/184517, which adapt the shuttles to place them above a container to be conveyed between workstations placed above the transit surface on which the carts move, at a level above the containers.

Patent document US 2018/0229866 discloses a machine that uses a "planar motor" conveyor to convey and fill rigid containers, in the form of vials, which are conveyed suspended between workstations. In document US 2018/0229866, express mention is made of the versatility of the machine, in the sense that the movement of the shuttles is not subject to the rigidity imposed by their coupling to a rail. Furthermore, the machine has the advantage that carrying out sequential or fixed process steps is no longer absolutely necessary.

The use of these "planar motor" conveyors in packaging machines, however, represents a much more important economic barrier than the use of magnetic rail conveyors already represented.

The cost and complexity of machines that incorporate "planar motor" conveyors is proportional to the extension of the transit surface, i.e., to the extension of the surface over which the movement of the shuttles can be controlled, since it multiplies the number of electric energising means, which usually comprise electrical coils or windings conveniently distributed and configured to selectively generate magnetic fields that will couple and interact magnetically with the shuttles to promote their movement, as well as their necessary connection during the use of the machine to a grid for selectively supplying electrical power that has adequate values of electrical voltage and current.

Another purpose of the invention is to provide a system for conveying articles with a "planar motor" conveyor, as well as a packaging machine that incorporates said system, the machine being particularly suitable for packaging at least one pourable product in flexible containers conveyed in a suspended mode, which minimise the required extension of the transit surface.

It is of interest to note that the transit surface is vertical in the machine according to US 2018/0229866. This can be a drawback since if the necessary connection during the use of the machine to the grid for the aforementioned electrical power supply fails, the shuttles and the conveyed containers would fall due to gravity. To overcome this drawback, even more complex conveyors are known, which comprise magnetic security means with at least one magnet device configured to take on a first inactive condition and a second active condition that generates a magnetic attraction force suitable for interacting with the shuttles and blocking them with respect to the transit surface when the electrical power supply fails. An example is described, for example, in patent document WO2023/135616.

Another purpose of the invention is to provide a system for conveying articles, as well as a packaging machine that incorporates said system, which overcome the drawbacks associated with a machine with a vertical transit surface without requiring magnetic security means of the type described in WO2023/135616.

### Description of the invention

According to a first aspect of the invention, a system according to claim 1 is proposed.

The system comprises a conveyor with mobile shuttles by magnetic levitation with respect to an essentially flat, preferably horizontal transit surface having a given contour, the shuttles following paths that can be predetermined in advance and the shuttles being equipped with holding means for holding, by themselves or in cooperation with the holding means of an adjacent shuttle, at least one article, which may be a container in a suspended mode.

In essence, the system is characterised in that the holding means are configured such that they extend, or are capable of extending, outside the projection *zn* of their associated shuttle, where the projection *zn* is the projection in the direction normal to the transit surface with respect to which said shuttles levitate; and in that the predeterminable paths comprise an operational section along which the holding means of the shuttles that run along said operational section are arranged outside the projection ZN of the transit surface, where the projection ZN is the projection in the direction normal to said transit surface, enabling the shuttles to convey articles, for example, containers held in a suspended mode, outside the given contour of the transit surface.

The system is especially advantageous when combined with at least several of the workstations being located to operate on the conveyed articles, for example, conveyed containers held in a suspended manner outside the given contour of the transit surface, along said operational section.

As explained later, since the articles are flexible containers, the workstations can be of the type that ensure the filling and closing of the conveyed containers; then, a machine that incorporates the system of the invention is especially suitable for packaging products in containers.

The workstations may, however, be of the type that perform other operations on the conveyed articles.

It should be noted that since the articles, for example, containers, are conveyed outside the given contour of the transit surface of the conveyor, possible residue and/or dirt that may be generated when carrying out operations on the articles, for example, container filling operations, will not be deposited directly on the transit surface.

In an embodiment of interest, the holding means are configured such that by extending outside the projection *zn* of their associated shuttle, they can invade the projection *zn* of a nearby shuttle without mechanically interfering with said nearby shuttle; and the predeterminable paths comprise a return section along which the holding means of shuttles that run along said return section without holding an article pass through the projection *zn* of shuttles that are or run along the operational section.

As explained in detail later, this measure makes it possible to reduce the dimensions of the transit surface, which directly affects the dimensions of the conveyor, and this has a direct impact, reducing the cost of the system and that of a packaging machine that incorporates said system.

As also explained in detail later, this measure makes it possible to impart paths for the shuttles without the need for them to change orientation along the same, being able to give up a degree of freedom of movement of these shuttles, specifically that of spin or of rotation around an axis normal to the transit surface. This simplifies the system and has a direct impact, reducing the cost of the system and that of a packaging machine that incorporates said system.

In an embodiment of interest, the transit surface is sized according to the shuttles, determining at least one operational area in which there is only space for two shuttles in a width dimension *y*, and there is space for a plurality of shuttles in a length dimension *x*, orthogonal to the width dimension *y*; the aforementioned operational section is in the direction of the length dimension *x* of the operational area and in a first direction x1; and the aforementioned return section is also in the direction of the length dimension *x* of the operational area, but in a second direction x2, contrary to the first direction x1.

In a variant, the predeterminable paths also comprise a withdrawal section in the direction of the width dimension *y* of the operational area and in a first direction y1; and an arrangement section also in the direction of the width dimension *y* of the operational area, but in a second direction y2, contrary to the first direction y1.

Preferably, although optionally, between the operational and return sections, and vice versa, of the predeterminable paths, the shuttles do not change orientation.

According to one embodiment, the system comprises equal shuttles which holding means comprise an arm with a proximal end fixedly, or hingedly, attached to the associated shuttle and with a distal end that is permanently located, or that can be located in a rotated position of the arm, outside the projection *zn* of the associated shuttle and which is equipped with a clamp mechanism that can be actuated between open and closed positions; and said arms are located with respect to the plan figure of the shuttles so that the order of placement of two equal shuttles juxtaposed adjacently with their arms extending outside the projection *zn* and parallel to the same side of the same changes the separation distance between their clamp mechanisms.

As better explained later, this measure simply enables the system, and a packaging machine incorporating said system, to convey articles, for example, containers, of different formats, in particular to adapt to articles, for example, containers, of unequal width.

In a variant, the plan figure of the equal shuttles is a rectangular figure, such as, although optionally, square, and the arrangement of the arm of the holding means, parallel to two of the sides of the plan figure, is not symmetrical with respect to said plan.

As mentioned before, the transit surface of the conveyor is preferably a horizontal surface.

In the context of the invention, horizontal surface is understood as a surface that is located in a horizontal plane when the system is at rest or is stable on a floor of an installation. Obviously, small variations in inclination are considered due to the tolerances that the support chassis of the system and/or of the floor may have, as is common to any other horizontal article conveying system.

In one embodiment, the transit surface is oriented upward, levitating the shuttles above said transit surface.

In another embodiment, however, the transit surface is oriented downward, levitating the shuttles below said transit surface.

As explained later, this second option has associated advantages. Without being a complete list, it prevents the unwanted accumulation of dirt or elements foreign to the conveyor of the system on the transit surface; and the solutions required for supplying the articles, for example, containers, to the system are facilitated, simplified and compacted.

In the event that the transit surface of the system is oriented downward, the invention envisages that the shuttles comprise two opposite and parallel flat faces, of which one is an active face facing and magnetically interacting with the transit surface of the conveyor, and the other is a supporting face; and where the conveyor of the system comprises a containment element that spans the transit surface and extends below and at a distance from the shuttles when the shuttles are magnetically coupled and levitate with respect to the transit surface, said containment element offering a flat surface, parallel to the transit surface and on which the shuttles can rest by gravity and on their supporting face in a state of rest in the event that there is no magnetic link between said shuttles and the transit surface of the conveyor and from which state of rest the shuttles can adopt a state of levitation if a magnetic link is established between said shuttles and the transit surface of the conveyor.

In a variant, the containment element is configured as a grid.

In a variant, the containment element is movably mounted to approach or move away from the transit surface.

According to another aspect of the invention, a packaging machine for packaging products in containers is proposed that combines a system according to the invention with a plurality of workstations.

The holding means of the shuttles are configured to grasp at least one container on its sides, by themselves or in cooperation with the holding means of an adjacent shuttle. As explained later, for this purpose, the holding means may be equipped with clamps or accessory elements for each clamp or accessory element to grasp a portion of the container on one side edge thereof.

The plurality of workstations comprises stations located to operate on the containers grasped and conveyed in a suspended mode outside the contour of the transit surface when the shuttles of the system run along the operational section.

In a variant, the machine is equipped with a container receiving station, and may be capable of performing a first operation on the received containers; with at least a first workstation on a first side of the receiving station and capable of performing a second operation on the container or containers conveyed and placed within reach; and with at least a second workstation on a second side of the receiving station and capable of performing a third operation on the container or containers conveyed and placed within reach, where said second and third operations may be the same. It is envisaged that in this embodiment the conveyor of the system is capable of imparting paths for the shuttles so that one by one, or in pairs, and in a sequence they depart from the receiving station, beginning their operational section but altering their direction of movement in order to convey the containers received each time at the receiving station to a different side of said receiving station.

As explained later, this optimises the cadence of the machine especially when the execution time of an operation that can be carried out on the containers at the receiving station is shorter than the execution time of the operation that can be carried out on the containers at a workstation, preferably at least two workstations, each on one side of the receiving station.

In a variant of the machine, the conveyor has a transit surface sized according to the shuttles, determining at least one operational area in which there is only space for two shuttles in a width dimension *y*, and there is space for a plurality of shuttles in a length dimension *x*, orthogonal to the width dimension *y*; and the operational section of the paths that the system imparts on the shuttles is in the direction of the length dimension *x* of the operational area and in a first direction x1.

In a variant, it is envisaged that the paths imparted on the shuttles by the system include a return section also in the direction of the length dimension *x* of the operational area, but in a second direction x2, contrary to the first direction x1; and that along the length dimension x of the operational area, the machine is equipped on the same side of the receiving station with at least N workstations, where N>1, and the predeterminable paths comprise paths which withdrawal sections occur without the shuttles having passed through the N workstations, said paths being imparted on the shuttles in the event that pre-established conditions are met and after operating the holding means to release the conveyed container.

This variant takes advantage of the fact that the shuttles are not mechanically coupled to a rail, said shuttles being held to paths imposed by the rail.

The pre-established conditions may be, by way of example only, conditions that determine whether the packaging meets the desired quality parameters.

A pre-established condition may be or may come as a function of a measured weight value, as explained later.

In a variant of the machine, at least one workstation on each side of the receiving station is a station capable of closing the conveyed container.

According to another aspect of the invention, said invention relates to a method for moving shuttles on a conveyor with mobile shuttles by magnetic levitation with respect to an essentially flat, horizontal transit surface having a given contour, the shuttles being equipped with holding or supporting means, to hold or support by themselves or in cooperation with the holding or supporting means of an adjacent shuttle, at least one article in a suspended mode, the method comprising imparting paths on the shuttles that comprise sections in which the holding or support means are arranged outside the projection ZN of the transit surface, where the projection ZN is the projection in the direction normal to said transit surface, enabling the shuttles to convey the articles in a suspended mode outside the given contour of the transit surface.

In a variant of the method, said method comprises imparting paths on the shuttles that comprise sections in which the holding or support means invade the projection *zn* of nearby shuttles, where the projection *zn* is the projection of the shuttle in the direction normal to the transit surface with respect to which the shuttles of the conveyor levitate.

Throughout this specification, the term "comprises" or variations such as "has" or "with", will be understood to imply the inclusion of an element or group of elements mentioned, but not the exclusion of any other element or group of elements.

### Brief description of the drawings

Figure 1 is a simplified perspective view of a packaging machine according to the invention, without showing workstations;
Figure 2 is a schematic side view of the machine of Figure 1, showing two shuttles that are adjacent at one moment along respective operational and return sections;
Figure 3 is a simplified plan view of the machine according to Figure 1 on which a particular arrangement of the workstations and a possible path that can be imparted on the shuttles has been indicated;
Figure 4 is another simplified plan view of the machine according to Figure 1 on which the same arrangement of workstations, but another possible path that can be imparted on the shuttles has been indicated;
Figures 5a, 5b and 5c are respective perspective views of a shuttle and of the clamp mechanism of its holding means, adopting closed and open positions, respectively;
Figures 6a and 6b show an alternative clamp mechanism, adopting closed and open positions, respectively;
Figure 7 shows four equal shuttles that cooperate in pairs, where each pair conveys a container, the containers having different formats;
Figure 8 is a view of the machine according to Figure 1 which serves to illustrate the capability of the machine to adapt and convey containers of different formats just by changing the order and/or arrangement of the shuttles as illustrated previously in Figure 6;
Figure 9 is a simplified sectional view according to a cross-sectional plane of another packaging machine according to the invention, without showing workstations, but showing a container supply system adopting two different positions;
Figure 10 is a perspective view of a shuttle of the machine according to Figure 9; and
Figures 11 and 12 are respective simplified top and bottom perspective views, respectively, of the machine according to Figure 8, without showing workstations.

### Detailed description of an embodiment

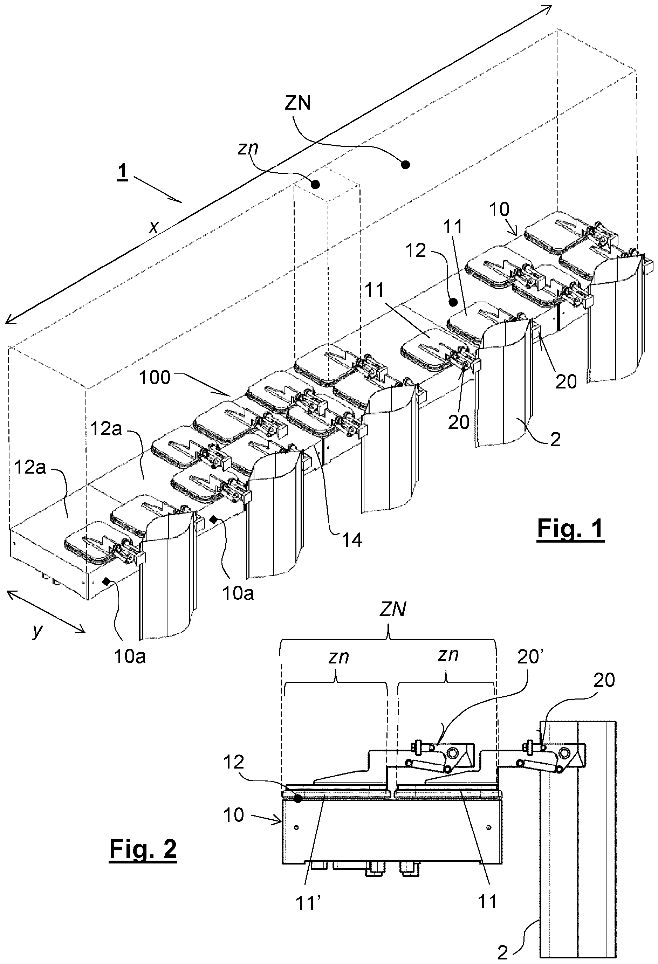

The machine 1 that exemplifies a first variant of the invention in Figure 1 comprises in a known manner several workstations (not shown in Figure 1) and a system 100 for conveying articles with a "planar motor" conveyor 10 with a platform that determines a transit surface 12 on which several shuttles 11 levitate in a driven manner.

A control unit controls the movement of the shuttles 11. The control unit is programmable and comprises programmes that, when executed, produce the coordinated movement of the shuttles 11 following paths predetermined in advance that are above, and do not come into contact with, the transit surface 12.

According to some embodiments of the present invention, the system 100 of the machine 1 also comprises position sensors associated with at least one of the transit surface 12 and the shuttles 11, said sensors being suitable for detecting one or more of the position, the forward speed or possibly other parameters correlated with the movement of the shuttles and transmitting the data to the control unit.

In the system 100 of the exemplary machine 1, the transit surface 12 is horizontal. The transit surface can, however, be inclined at a desired angle with respect to a horizontal plane.

Associated with the transit surface are electric energising means of a known type and not shown, which are configured to selectively generate one or more locally distributed magnetic fields, in specific areas of the transit surface 12.

For example, the electric energising means may comprise a plurality of electrical coils or windings suitably arranged and connected, during the use of the machine, to a grid for supplying electrical power capable of injecting adequate values of electrical voltage and current.

The platform may be a single body and may contain therein the aforementioned electric energising means arranged according to a predefined pattern.

In the system 100 of the exemplary machine 1, however, the transit surface 12 is subdivided into partial surfaces 12a. Each partial surface 12a is associated with a motor unit 10a of the "planar motor" conveyor 10. The motor units 10a, each comprising their own electrical energising means, as if it were a modular construction, are placed adjacent to form the platform and its partial surfaces 12a, the transit surface 12 being without discontinuities that prevent the transit of the shuttles from the area of influence of a partial surface 12a to another that is adjacent to it.

The motor units 10a can be placed, for example, adjacent to each other, determining a type of grid with various shapes.

In the system 100 of the machine 1 that exemplifies the invention, the motor units 10a are placed in a single row arrangement, the partial surfaces 12a together forming a transit surface 12 for the shuttles 11, which is rectangular in shape with a contour 14 and having a width dimension *y* and a length dimension *x*.

This rectangular shape can also be provided by placing motor units in rows and columns.

In some embodiments of the present invention, each shuttle 11 is provided with corresponding magnetic means, such as permanent magnets, which are not shown in the drawings, in order to interact with the magnetic fields of one or more of the electrical energising means of the platform, for the example, of the motor units 10a that make up the platform, so that each shuttle 11 can be driven to move autonomously with respect to the transit surface 12 slightly distanced from it, in other words, without making contact with said transit surface 12.

One peculiarity of the system 100 of this machine 1 exemplifying the invention is that the shuttles 11 are sized such that no more than two shuttles fit in the width dimension *y* of the transit surface 12, while several shuttles 11 fit in the length dimension *x* of the transit surface 12.

In the system 100 of the machine 1 that exemplifies the invention, the shuttles 11 have corresponding holding means 20 for holding, in cooperation with the holding means of an adjacent shuttle, at least one container 2 in a suspended mode.

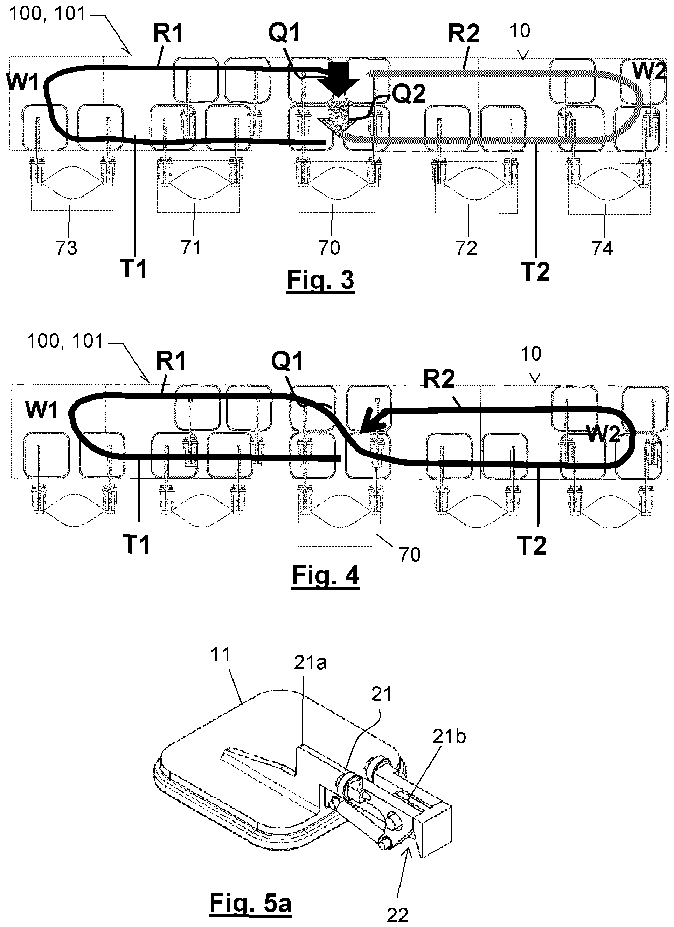

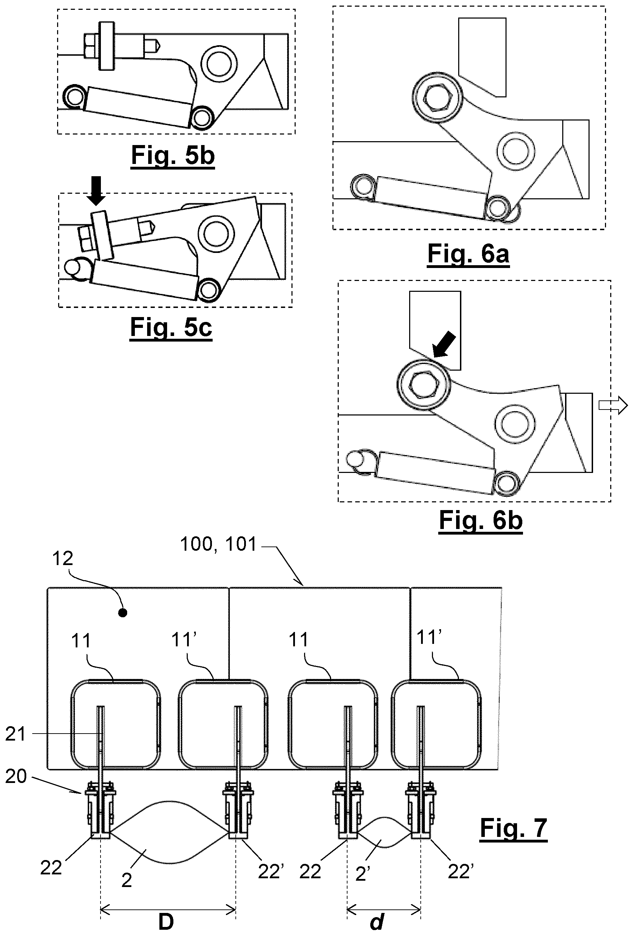

In the system 100 of the machine 1 that exemplifies the invention, said holding means 20 comprise a structure with an arm 21 having a proximal end 21a, fixedly attached to the associated shuttle 11, and a distal end 21b, which is equipped with a clamp mechanism 22 that can be actuated between open and closed positions suitable for releasing or grasping, respectively, a container 2 on its side edge, as illustrated in Figure 5a.

The invention provides that the clamp mechanisms 22 can be actuated by members that are not installed or that do not travel with the shuttles 11. By way of example only, the clamp mechanisms 22 may default to an open or closed position, preferably closed, and be forced to adopt the other of their open or closed position, preferably open, by mechanical interference with moving or fixed parts of the system, or of the machine, but mechanically detached from the shuttles 11.

In this sense, the sequence of Figures 5a and 5b show in detail a clamp mechanism prepared to be actuated by a mobile or active component, such as a pusher, which, when the shuttle is static, exerts a thrust in the direction of the arrow on a resistance arm of a lever component of the clamp mechanism so that the clamp mechanism adopts the open position, overcoming the force that an elastic means exerts on the lever component to arrange it by default in a position such that the clamp mechanism adopts the closed position.

The sequence of Figures 6a and 6b show an alternative clamp mechanism, in this case prepared to be actuated by a fixed or passive component, such as a thruster, which, by moving the shuttle, abuts with and exerts a thrust in the direction of the arrow on a resistance arm of a lever component of the clamp mechanism so that the clamp mechanism adopts the open position, overcoming the force that an elastic means exerts on the lever component to arrange it by default in a position such that the clamp mechanism adopts the closed position.

A first peculiarity of the system 100 of the exemplary machine 1 is that the distal end 21b equipped with the clamp mechanism 22 of the arm 21 is permanently located outside the projection *zn* of the associated shuttle, where the projection *zn* is the projection of the shuttle in the direction normal to the transit surface 12 with respect to which the shuttles 11 levitate.

In the case of the example, where the transit surface 12 is horizontal, the aforementioned distal end 21b is permanently located outside the vertical projection of the associated shuttle 11, a vertical projection which imaginary lateral limits have been illustrated by dashed lines in Figures 1 and 2.

Another peculiarity of the system 100 of the exemplary machine 1 is that the paths predetermined beforehand that are imparted on the shuttles 11 comprise an operational section T1 along which the clamp mechanisms 22, which extend outside the aforementioned projection *zn*, also extend outside the projection ZN of the transit surface 12 in the direction normal to the same, thus enabling the shuttles 11 to hold and convey a container 2 in a suspended mode and being able to do so by arranging the container 2 outside the contour 14 of the transit surface 12, i.e., also outside the projection ZN of the transit surface 12 in the direction normal to the same.

In the case of the example, where the transit surface 12 is horizontal, the projection ZN is a vertical projection, which imaginary lateral limits have also been illustrated by dashed lines in Figures 1 and 2.

In the exemplary machine 1, the holding means 20 of two adjacent shuttles 11 cooperate to convey a container 2, each clamp mechanism 22 holding a side edge of the container, in the form of a flexible bag or envelope-type container.

Although not represented, the invention also envisages other solutions for grasping or holding containers.

For example, in an alternative variant of a machine according to the invention, the holding means of one or more shuttles may have two arms, each equipped at their distal end with a clamp mechanism to hold and convey a container without having to cooperate with an adjacent shuttle to do so. Also in this case, the distal ends equipped with respective clamp mechanisms will be permanently located, or may be located, outside the projection *zn* of the associated shuttle in the direction normal to the transit surface to hold and convey a container in a suspended mode outside the contour of the transit surface, i.e., also outside the projection ZN of the transit surface in an operational section T1 of its path.

For example, in another alternative variant of a machine according to the invention, the arms 21 of the holding means 20 can be hingedly attached by their proximal end 20a to the associated shuttle; or they can be hinged between their proximal and distal ends, in any case providing, in this or another way, the holding means 20 with the capability to adopt a retracted position, in which they do not extend outside the projection *zn* of the associated shuttle; and an extended position, in which they extend outside the projection *zn* of the associated shuttle in such a way that it allows, in collaboration with the holding means of a nearby shuttle, holding and conveying a container in a suspended mode outside the contour 14 of the transit surface 12, i.e., also outside of the projection ZN of the transit surface 12 in the direction normal to the same. It is contemplated that the shuttle carries drive means with it for changing the position of the holding means 20 with respect to the associated shuttle 11.

In that variant of a machine with at least one shuttle which holding means are prepared to hold and convey a container without having to cooperate with an adjacent shuttle for this purpose, it is also contemplated that these holding means also have the capability to adopt a retracted position, in which said holding means do not extend outside the projection *zn* of the associated shuttle; and an extended position, in which they extend outside the projection *zn* of the associated shuttle in such a way as to allow a container to be held and conveyed in a suspended mode outside the contour 14 of the transit surface 12, i.e., also outside the projection ZN of the transit surface in the direction normal to the same. Also in this case, it is contemplated that the shuttle carries drive means with it for changing the position of the holding means 20 with respect to the associated shuttle 11.

Returning to the specific machine 1 that exemplifies the invention, another peculiarity of the machine 1 is that it has up to five workstations 70, 71, 72, 73, 74 (see Figure 3) that are located to operate on the containers 2 that are held and conveyed in a suspended mode outside the contour 14 of the transit surface 12 of the system 100.

Advantageously, the height dimension of the conveyed containers 2 does not condition nor interfere with the construction of the conveyor 10 of the system 100, since the containers 2 can extend vertically to any length without interfering with the conveyor 10.

Figure 2 shows another peculiarity of the system 100 of the exemplary machine 1. Specifically, it shows that the holding means 20 are configured such that by extending outside the projection *zn* of the associated shuttle 11, they can invade the projection *zn* of a nearby shuttle without mechanically interfering with the same.

Advantageously, the extension of the transit surface 12 is minimised. Consequently, the number or size of the motor units 10a is also reduced.

These advantages will be better understood from the explanation that follows, with reference to the exemplary machine 1.

In said exemplary machine 1, the workstations comprise a receiving station 70 for pre-made containers; two workstations 71 and 73 on a first side of the receiving station 70 in the direction of the dimension *x* of the transit surface 12; and two other workstations 72 and 74 on a second side of the receiving station 70 also in the direction of the dimension *x* of the transit surface 12.

In a variant of the machine 1, the receiving station 70 can be prepared to carry out an operation on the received containers 2, such as a filling operation, in a conventional way, by pouring a product into the containers that are at their disposal. The details of the filling means are not described because the options available to the person skilled in the art are known and because their form of implementation does not affect the practice of the invention.

In combination or not with the foregoing, the workstations 71 and 72 can be prepared to also carry out filling operations, for example, prepared to pour into the available containers a product different from that which is introduced into the containers at the receiving station 70 if a filling operation is also carried out at said receiving station; and the workstations 73 and 74 can be stations for closing the available containers. This arrangement is particularly suitable for dispatching the containers, which are sequentially and partially filled with a first product at the receiving station 70, to a different workstation 71, 72 each time, alternately, i.e., each time to a different side of the receiving station 70.

The details of the filling/closing means of the workstations 71 to 74 are not described because the options available to the person skilled in the art are known and because their form of implementation does not affect the practice of the invention.

In a specific form of operation of the machine 1, the receiving station 70 carries out an operation on the containers with an execution time t; and the execution time of the slowest operation carried out at the workstations 71 and 73 or 72 and 74 is an execution time T, where T>t, and preferably, approximately, T=2t.

Continuing with this example, the shuttles 11 of the system 100 can be organised into two groups, each group having an even number of shuttles that exceeds the number of workstations on the same side of the receiving station 70.

The predetermined paths followed in pairs by the shuttles 11 of a group comprise looped paths with sections indicated by arrows in Figure 3, which in turn comprise
- an operational section T1 in the direction of the length dimension *x* of the transit surface and in a first direction x1, toward the left in reference to Figure 3, its holding means 20 extending outside the vertical projection ZN of the transit surface 12 and the shuttles of each pair cooperating with each other to hold and convey a container 2, first placing it within reach of the workstation 71 and then within reach of the workstation 73, preferably temporarily stopping in front of said stations and preferably bringing the shuttles of each pair closer together to ensure the closure of the container after passing through the workstation 71, also being able to do so once the container is stopped and within reach of the workstation 73;
- a withdrawal section W1 in the direction of the width dimension *y* of the transit surface and in a first direction y1, preferably without changing the orientation of the shuttles and which occurs after actuating the clamp mechanisms 22 to adopt their open position and release the containers;
- a return section R1 in the direction of the length dimension *x* of the transit surface and in a second direction x2, contrary to the first direction x1, toward the right with reference to Figure 3, and along which the transit of the holding means 20 of the shuttles 11, which travel in vacuum, occurs through the projection *zn* of shuttles located along its operational section T1 holding and conveying containers; and
- an arrangement section Q1 in the direction of the width dimension y of the transit surface, but now in a second direction y2, contrary to the first direction y1 that arranges the shuttles 11 in pairs in order to receive and hold a new container at the workstation 70 with the actuation of the clamp mechanisms 22 to adopt its closed position and grasp the container, to start the loop again once the operation that is carried out on the container just held in said receiving station 70 is completed.

The predetermined paths followed by the pairs of shuttles 11 of the other group comprise mirror looped paths with those of the first group, also indicated by arrows in Figure 3, coinciding spatially, although not temporally, in their arrangement section Q2, thus comprising
- an operational section T2 in the direction of the length dimension *x* of the transit surface and in the second direction x2, towards the right with reference to Figure 3, its holding means 20 extending outside the vertical projection ZN of the transit surface 12 and the shuttles of each pair cooperating with each other to hold and convey a container 2, first placing it within reach of the workstation 72 and then within reach of the workstation 74, preferably temporarily stopping in front of said stations and preferably bringing the shuttles of each pair closer together to ensure the closure of the container after passing through the workstation 72, also being able to do so once the container is stopped and within reach of the workstation 74;
- a withdrawal section W2 in the direction of the width dimension *y* of the transit surface and in the first direction y1, preferably without changing the orientation of the shuttles and which occurs after actuating the clamp mechanisms 22 to adopt their open position and release the containers;
- a return section R2 in the direction of the length dimension *x* of the transit surface and in the first direction x1, contrary to the second direction x2, towards the left with reference to Figure 3, and along which the transit of the holding means 20 of the shuttles 11, which travel in vacuum, occurs through the projection *zn* of shuttles located along its operational section T2 holding and conveying containers; and
- an arrangement section Q2 in the direction of the width dimension y of the transit surface, but now in the second direction y2, contrary to the first direction y1 that arranges the shuttles 11 in pairs, alternating with pairs of shuttles from the first group, in order to receive and hold a new container at the receiving station 70 with the actuation of the clamp mechanisms 22 to adopt its closed position and grasp the container, to start the loop again once the operation that is carried out on the container just held in said receiving station 70 is completed.

It should be noted that the moving technique that is used in "planar motor" conveyors allows the shuttles to be given more than two degrees of freedom of inclination with respect to the transit surface on which they levitate or more than two degrees of freedom of approach and distance with respect to the same, since a spin movement (to rotate on themselves) can also be transmitted to the shuttles.

In the system 100 of the exemplary machine 1, if desired, these other degrees of freedom can be dispensed with and the machine 1 can be operated with a system 100 with a conveyor 10 which motor units 10a and matching shuttles allow said shuttles to be given only two degrees of freedom to move in a plane parallel to the transit surface 12, for example, in directions coinciding with the length dimension *x* and width dimension *y* of said transit surface 12 of the exemplary system 100. In the exemplary system 100, in particular, the spin movement can be dispensed with.

It is contemplated, however, that a machine according to the invention uses the capabilities provided by certain known "planar motor" conveyors, for example, to weigh containers held and conveyed in a suspended mode. Techniques for weighing articles conveyed by shuttles on a "planar motor" conveyor are described, for example, in patent document WO 2017/174286.

In a variant of a machine according to the invention with workstations that are filling stations, weighing techniques such as those mentioned above are applied, for example, after completing a filling operation.

The weight values obtained can be used to trigger actions based on these values.

For example, in a variant in which several filling operations are carried out on a container at different workstations, a deviation from a target weight that is measured after completing a filling operation at a first workstation is used to control the apparatus or filling means of a second workstation that follows, so that the cumulative product weight introduced into the containers at the first and second workstations approximates a target total weight.

In another example, a deviation from a target weight that is measured after completing a filling operation at at least one workstation can trigger the control of the clamp mechanisms of the holding means to release a held container and promote the movement of the associated shuttle or shuttles in a withdrawal section, preferably without changing orientation, followed by a return section to start a new loop of its path.

The system 100 of a machine 1 such as that exemplifying the invention can be operated in other ways.
By way of example only, Figure 4 shows an alternative to the way the shuttles move in Figure 3. In this case, the shuttles, also in pairs, follow a repeated figure eight path that allows alternating the sending of pairs of shuttles to one side and to the other of the receiving station 70, as occurred in the example in Figure 3, as well as arranging pairs of shuttles sequentially in said receiving station 70.

Another peculiarity of the system 100 of the exemplary machine 1 is shown in Figure 7.

The shuttles 11 may have a base, i.e., a plan figure, which is polygonal, regular or irregular, in particular quadrangular, for example, square or rectangular, or have other polygonal shapes defined by a closed dashed line or by a combination of rectilinear and curved lines.

In any case, it is envisaged that the system of the machine comprises equal shuttles 11 but which respective holding means 20 are located with respect to the plan figure of the associated shuttles, so that the order of placement of two equal, juxtaposed or adjacent shuttles one next to the other and the holding means extending towards the same direction outside the projection zn changes the separation distance d, D between their clamp mechanisms 22.

This feature is understood from Figure 7 mentioned above. The drawing shows the shuttles of the system 100 of the exemplary machine 1, said shuttles having an essentially square plan figure, specifically showing two shuttles 11, 11' that are equal but placed close together in a different order. It can be seen that the shuttles 11, 11' are not symmetrical because the arms 21, 21' of the respective holding means 20, 20' are moved to one side of the plane of symmetry of the square plan figure.

In the case of the pair of shuttles 11, 11' arranged on the left in Figure 6, the order of placement of the shuttles 11', 11 entails a distance D between clamp mechanisms 22 that cannot be reduced, entailing a barrier for the holding and conveying of containers 2 of a format with small width dimensions, at least for the holding and conveying of containers which width dimension is such that the clamp mechanisms 22', 22 would have to approach a distance less than D in order to open them.

In the case of the pair of shuttles 11, 11' arranged on the right in Figure 6, the order of placement of the shuttles 11, 11' entails being able to take on a distance *d* between clamp mechanisms 22, 22' that fulfils the relationship *d*<*D*, meaning it overcomes the barrier where, for the holding and conveying of containers 2 of a format with small width dimensions, it has the placement of the shuttles 11', 11 of the pair arranged on the left in Figure 6. However, the counterpart is that if this order of placement is used to hold and convey containers which width is such that to close them the clamp mechanisms 22, 22' would have to be moved further away, for example a distance D, a greater extension of transit surface 12 in its length dimension x would be required, which entails larger motor units or a greater number of motor units and consequently an increase in machine costs.

Depending on the format of the containers to be conveyed, the optimal order of placement of the shuttles can be chosen. The system, and the machine that incorporates the same, thus become very versatile.

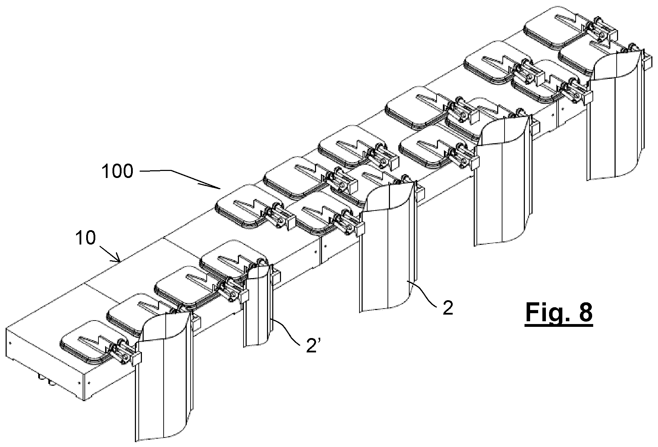

In fact, there is nothing to prevent pairs of shuttles from being combined in a different order of placement, as shown in Figure 8.

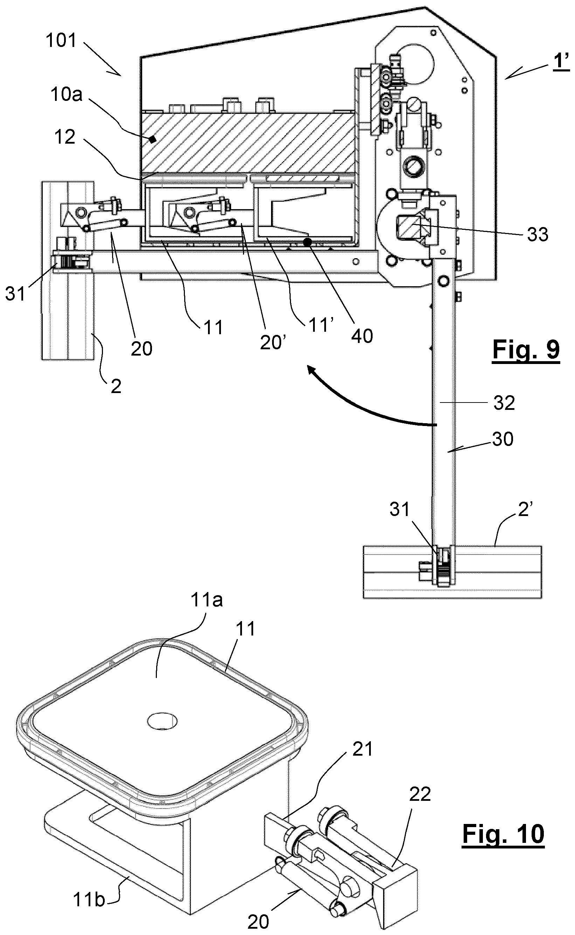

The machine 1' in Figures 9, 11 and 12 that exemplifies a second variant of the invention shares essential features with the machine 1 of Figure 1.

Although the transit surface 12 in the system 101 of the machine 1' in Figures 9, 11 and 12 is also horizontal, in this case it is oriented downward, unlike in the system 100 of the machine 1 in Figure 1, which transit surface was oriented upward.

Therefore, the proposal of the system 101 of this variant of the machine 1' lies, with respect to the system 100, in "turning upside down" the latter so that the shuttles 11 levitate at a distance from the transit surface 12, but below the transit surface instead of on or above the transit surface, as was the case with the system 100 on the machine 1.

To facilitate explanations, the parts and components that the machine 1' with the system 101 shares with the machine 1 with the system 100 are designated with the same reference numbers in the drawings, specifically in Figures 9 to 12.

The particular configuration of the system 101, with the transit surface 12 oriented downward, offers some advantages to the machine 1' with respect to the machine 1 with the system 100 with the transit surface 12 oriented upward.

Firstly, the downward orientation of the transit surface 12 helps to prevent it from getting dirty, in particular so that no residue and/or foreign elements that could affect the movement of the shuttles 11 can accumulate on it.

Secondly, the motor units 10a required by the conveyor 10 extend above the transit surface and not below it. This leaves more space below the transit surface that can be used for components of the machine 1' or for parts of the installation to which the system 101 and the machine 1' belong, a space that a machine 1 with a system 100 does not offer, and the transit surface 12 of which conveyor 10 is oriented upward.

The machine 1' that exemplifies the second variant of the invention is illustrated equipped with a supply system 30 for containers 2.

Said supply system 30 comprises a rotary structure 32 around an axis of rotation 33 that is oriented parallel to the transit surface 12. The rotary structure 32 is equipped at its distal end with a container holding mechanism configured to grasp a container 2' waiting in an accumulation of containers and to deliver the grasped container to the system 101 of the machine 1' and specifically to the pair of shuttles 11 that will wait appropriately at the receiving station 70 (see Figure 10).

In the example, the holding mechanism comprises a pair of clamp mechanisms 31 capable of holding, each one on a side edge, the container 2' waiting in an accumulation of containers.

In the example, the rotary structure 32 must rotate an angle of 90° to move the container 2' from the container accumulation (not shown) to the receiving station 70 of the machine 1'.

This turning manoeuvre is simple, while it is also possible to provide the rotary structure 32 with a straight shape.

This same configuration may not be possible if the transit surface 12 is oriented upward since there would be mechanical interference with the motor groups 10a of the conveyor 10 that would project or extend downward from said transit surface 12.

Consequently, if a supply system 30 similar to the one that equips the machine 1' of Figure 9 is to be used in a machine 1 like the one in Figure 1, the rotary structure 32 should adopt shapes other than a straight shape to avoid mechanical interference with the motor groups and a non-straight shape is not compatible with clamp mechanisms 31 integral with the rotary structure and that at the same time adopt the necessary position to grasp containers from the accumulation of containers that are waiting, substantially horizontally oriented, and to deliver containers to the receiving station, substantially vertical, only by rotating a rotary structure 90°.

In other words, if a supply system 30 similar to the one that equips the machine 1' in Figure 9 is to be used in a machine that uses a system 100, as in the case of the machine 1 of Figure 1, the choice must be made to accumulate the containers outside the vertical projection of the transit surface, increasing the total space required by the assembly formed by the machine, supply system and accumulation of containers; or by using more complex supply systems.

On the other hand, Figure 10 shows a shuttle 11 that is ideal or especially suitable for the conveyor 10 of the system 101 of the machine 1', with the transit surface 12 oriented downward.

The shuttle 11 comprises two opposite and parallel flat faces, of which one is an active face 11a facing and magnetically interacting with the transit surface 12 of the conveyor 10 and the other is a supporting face 11b.

The conveyor 10 of the system 101 comprises a containment element 40 that spans the transit surface 12 and extends below and at a distance from the shuttles 11 when they levitate with respect to the transit surface 12.

The containment element 40 offers a flat surface 40b that is parallel to the transit surface 12 and on which the shuttles 11 can rest by gravity and on their supporting face 11b in a state of rest in the event that there is no magnetic link between said shuttles 11 and the transit surface 12 of the conveyor 10. Advantageously, furthermore, the position of the containment element 40 with respect to the transit surface 12 is such that, from the state of rest, the shuttles 11 can automatically adopt a state of levitation if a magnetic link is established between said shuttles 11 and the transit surface 12 of the conveyor 10.

Then, the containment element 40 not only prevents an uncontrolled fall of the shuttles 11 when their magnetic coupling with the transit surface 12 of the conveyor 10 is absent or interrupted, but it also allows the shuttles to be magnetically coupled or re-coupled with the transit surface 12 when the magnetic links for this are established or re-established.

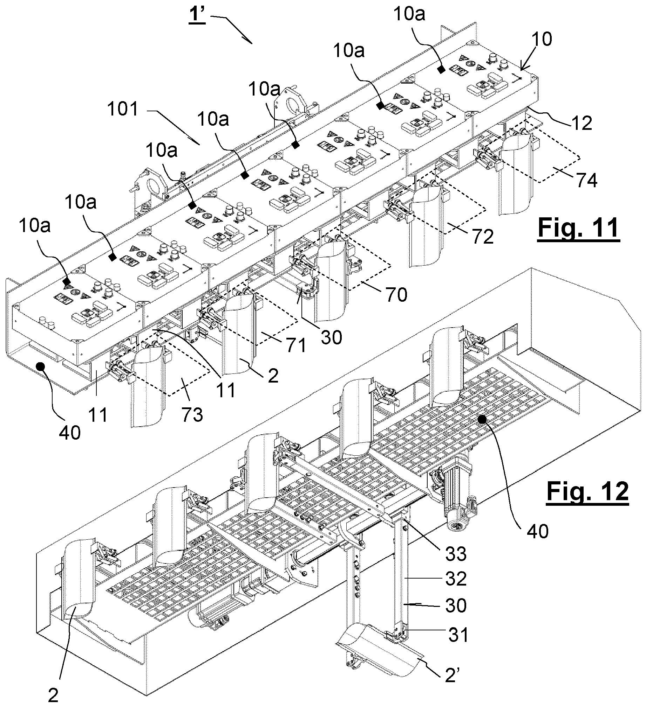

As best shown in Figure 12, in the machine 1' exemplified by the second variant of the invention, the containment element 40 is configured as a grid, so that it prevents the accumulation of dirt between the transit surface 12 and the containment element itself. The mesh density of the grid is selected to allow the type of dirt that can be generated when using the machine 1' to pass through the same.

The invention envisages that in a system 101 the containment element 40 can move with respect to the transit surface 12, for example, to bring the shuttles 11 closer to, or to move the shuttles 11 until they come into contact with, said transit surface 12. to establish or re-establish the magnetic links previously interrupted, accidentally or in a controlled manner.

## Claims

1. A system (100, 101) for conveying articles along several workstations (70, 71, 72, 73, 74), the system comprising a conveyor (10) with mobile shuttles (11, 11') by magnetic levitation with respect to a transit surface (12), essentially flat and having a given contour (14), following paths that can be predetermined in advance, the shuttles (11) being equipped with holding means (20) for holding, by themselves or in cooperation with the holding means (20) of an adjacent shuttle (11), at least one article, the system (100, 101) being **characterised in that**
- the holding means (20) are configured such that they extend, or are capable of extending, outside the projection *zn* of their associated shuttle (11), where the projection *zn* is the projection of the shuttle in the direction normal to the transit surface (12) with respect to which said shuttles levitate; **in that**
- the predeterminable paths comprise an operational section (T1, T2) along which the holding means (20) of the shuttles (11) that run along said operational section are arranged outside the projection ZN of the transit surface (12), where the projection ZN is the projection in the direction normal to said transit surface (12), enabling the shuttles (11) to convey the articles outside the given contour (14) of the transit surface (12) and by workstations (70, 71, 72, 73, 74) located to operate on the articles conveyed outside the contour (14) of the transit surface (12).

2. The system (100, 101) according to claim 1, **characterised in that**
- the holding means (20) are configured such that by extending outside the projection *zn* of their associated shuttle (11), they can invade the projection *zn* of a nearby shuttle (20') without mechanically interfering with said nearby shuttle; and **in that**
- the predeterminable paths comprise a return section (R1, R2) along which the holding means (20') of shuttles (11') that run along said return section without holding an article pass through the projection *zn* of shuttles (11) that are or run along the operational section (T1, T2).

3. The system (100, 101) according to claim 2, **characterised in that**
- the transit surface (12) is sized according to the shuttles (11), determining at least one operational area in which there is only space for two shuttles in a width dimension *y*, and there is space for a plurality of shuttles in a length dimension *x*, orthogonal to the width dimension *y*; **in that**
- the operational section (T1, T2) is in the direction of the length dimension *x* of the operational area and in a first direction x1; and **in that**
- the return section (R1, R2) is also in the direction of the length dimension x of the operational area, but in a second direction *x*2, contrary to the first direction *x1*.

4. The system (100, 101) according to the preceding claim, **characterised in that** the predeterminable paths comprise
- a withdrawal section (W1, W2) in the direction of the width dimension *y* of the operational area and in a first direction *y1*; and
- an arrangement section (Q1, Q2) also in the direction of the width dimension *y* of the operational area, but in a second direction *y2,* contrary to the first direction *y1.*

5. The system (100, 101) according to the preceding claim, **characterised in that** between the operational (T1, T2) and return (R1, R2) sections, and vice versa, of the predeterminable paths, the shuttles (11) do not change orientation.

6. The system (100, 101) according to any one of the preceding claims, **characterised in that** it comprises equal shuttles (11) which holding means (20) comprise an arm (21) with a proximal end (21a) fixedly, or hingedly, attached to the associated shuttle and with a distal end (21b) that is permanently located, or that can be located in a rotated position of the arm (21), outside the projection *zn* of the associated shuttle and which is equipped with a clamp mechanism (22) that can be actuated between open and closed positions; and **in that** said arm (21) is located with respect to the plan figure of the shuttles (11) so that the order of placement of two equal shuttles juxtaposed adjacently with their arms (21) extending outside the projection *zn* and parallel to the same side of the same changes the separation distance (d, D) between their clamp mechanisms (22).

7. The system (100, 101) according to the preceding claim, **characterised in that** the plan figure of the equal shuttles (11) is a rectangular figure, such as square, and **in that** the arrangement of the arm (21) of the holding means (20), parallel to two of the sides of the plan figure, is not symmetrical with respect to said plan.

8. The system (100, 101) according to any one of the preceding claims, **characterised in that** the transit surface (12) of the conveyor (10) is a horizontal surface.

9. The system (101) according to the preceding claim, **characterised in that** the transit surface (12) of the conveyor (10) is oriented downward, levitating the shuttles (11) below said transit surface (12).

10. The system (101) according to the preceding claim, **characterised in that** the shuttles (11) comprise two opposite and parallel flat faces, of which one is an active face (11a) facing and magnetically interacting with the transit surface (12) of the conveyor (10), and the other is a supporting face (11b); and **in that** the conveyor (10) comprises a containment element (40) that spans the transit surface (12) and extends below and at a distance from the shuttles (11) when the shuttles are magnetically coupled and levitate with respect to the transit surface, said containment element (40) offering a flat surface (40b), parallel to the transit surface (12) and on which the shuttles (11) can rest by gravity and on their supporting face (11b) in a state of rest in the event that there is no magnetic link between said shuttles and the transit surface (12) of the conveyor (10) and from which state of rest the shuttles (11) can adopt a state of levitation if a magnetic link is established between said shuttles and the transit surface (12) of the conveyor (10).

11. The system (101) according to the preceding claim, **characterised in that** the containment element (40) is configured as a grid.

12. The system (101) according to claims 10 or 11, **characterised in that** the containment element (40) is movable to approach or move away from the transit surface (12).

13. A machine (1, 1') for packaging products in containers (2), which has
- a system (100, 101) according to any one of the preceding claims, the holding means (20) of which shuttles (11) are configured to grasp at least one container on its sides, by themselves or in cooperation with the holding means (20) of an adjacent shuttle (11); and
- several workstations (70, 71, 72, 73, 74), located to operate on the containers (2) grasped and conveyed in a suspended mode outside the contour (14) of the transit surface (12) when the shuttles run along the operational section (T1, T2).

14. The machine (1, 1') according to claim 13, **characterised in that** the transit surface (12) of the system (100, 101) comprises a contour along which, on the outer side, several workstations are preferably located in alignment, comprising
- a receiving station (70) for containers (2), which may be capable of performing a first operation on the received containers,
- at least a first workstation (71, 73) on a first side of the receiving station (70) and capable of performing a second operation on the container or containers conveyed and placed within reach,
- at least a second workstation (72, 74) on a second side of the receiving station (70) and capable of performing a third operation on the container or containers conveyed and placed within reach, where said second and third operations may be the same;
and **in that** the conveyor of the system (100, 101) is capable of imparting paths on the shuttles (11) so that one by one, or in pairs, and in a sequence they depart from the receiving station (70), beginning their operational section but altering their direction of movement, in order to convey the containers received each time at the receiving station (70) to a different side of said receiving station (70).

15. The machine (1, 1') according to claim 13 or 14, **characterised in that** at least one workstation (73, 74) on each side of the receiving station (70) is a workstation capable of closing the conveyed container.

16. A method for moving shuttles (11) on a conveyor (10) with mobile shuttles (11) by magnetic levitation with respect to a transit surface (12), essentially flat and having a given contour (14), the shuttles (11) being equipped with holding or supporting means (20), to hold or support by themselves or in cooperation with the holding or supporting means (20') of an adjacent shuttle (11'), at least one article in a suspended mode, the method comprising imparting paths on the shuttles that comprise sections in which the holding or support means (20) are arranged outside the projection ZN of the transit surface (12), where the projection ZN is the projection in the direction normal to said transit surface (12), enabling the shuttles (11) to convey the articles in a suspended mode outside the given contour (14) of the transit surface (12).

17. The method according to claim 16, **characterised in that** it comprises imparting paths on the shuttles (11) that comprise sections in which the holding or support means (20) invade the projection zn of nearby shuttles, where the projection zn is the projection of the shuttle in the direction normal to the transit surface (12) with respect to which the shuttles of the conveyor (10) levitate.
